(19) Europäisches Patentamt European Patent Office Office européen des brevets

(11) **EP 3 247 029 A1**

(12) **EUROPEAN PATENT APPLICATION**

(43) Date of publication:
22.11.2017 Bulletin 2017/47

(51) Int Cl.:
*H02M 1/42* *(2007.01)*

(21) Application number: 17170228.5

(22) Date of filing: 09.05.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 18.05.2016 AU 2016901859

(71) Applicant: Rectifier Technologies Pacific Pty Ltd
Burwood, Victoria 3125 (AU)

(72) Inventors:
• **Machin, Nigel Charles**
**Hawthorn, Victoria 3122 (AU)**
• **Dekter, Jurien**
**Heathmont, Victoria 3135 (AU)**

(74) Representative: **Westphal, Mussgnug & Partner**
**Patentanwälte mbB**
**Am Riettor 5**
**78048 Villingen-Schwenningen (DE)**

(54) **THREE-PHASE POWER-FACTOR CORRECTING AC-DC SELF-BALANCING RECTIFIER WITHOUT NEUTRAL CONNECTION**

(57) A three-phase non-isolated AC to DC rectifier operable without connection to a neutral of a three-phase AC supply is disclosed. The rectifier combines three single-phase symmetrical AC-DC boost converters connected in parallel at their mid-points and outputs. The boost converters are controlled such that each converter presents an input resistance of equal value to the AC supply. Doing this produces a stable star-point at the AC input and a stable mid-point at the DC output, whereby the DC output voltages remain balanced around a mid-point voltage without additional balancing circuitry.

**Figure 1**

**Description**

**FIELD OF INVENTION**

The invention is in the field of power electronics, more specifically power conversion from three-phase AC input voltage to a boosted non-isolated DC output voltage and the control thereof.

**BACKGROUND OF INVENTION**

In a three-phase non-isolated rectifier it is desirable to generate a single DC output and draw power equally from all three phases in order to get maximum output from and minimum losses in the AC supply. Connection to the neutral of the AC supply is not necessary or desirable since the theoretical neutral current is zero in a balanced three-phase system, and in many cases the neutral is not available, either not wired to the point of connection of the equipment or not available from the main supply transformer due to delta connected secondary windings of the supply transformer. Some non-isolated rectifier topologies provide a mid-point output in addition to the desired single DC output. Topologies with a mid-point output generally use semiconductors rated at one half the voltage of those topologies without, and this property can provide an advantage in efficiency or cost. The mid-point is required to remain at the exact mid-point of the DC output for safe and stable operation of the circuit.

Some prior art examples of three-phase AC to DC rectifiers are described in the following reference documents, identified as Reference 1 to Reference 5. Each of these documents is incorporated in its entirety into this disclosure by cross-reference.

Reference 1: "A Novel Three-Phase Utility Interface Minimizing Line Current Harmonics of High-Power Telecommunications Rectifier Modules" by Kolar el al. presented at INTELEC 1993 shows a front-end rectifier that achieves the above objective, often referred to as the VIENNA topology. But this rectifier disconnects the mid-point of the DC output and the AC input which has advantages and disadvantages.

The VIENNA rectifier has a favourable power conversion ratio due to the above mentioned disconnect, and has little low frequency ripple current in the output capacitors. However it suffers a high common mode voltage burden and requires a feedback control system to assure that the mid-point remains stable.

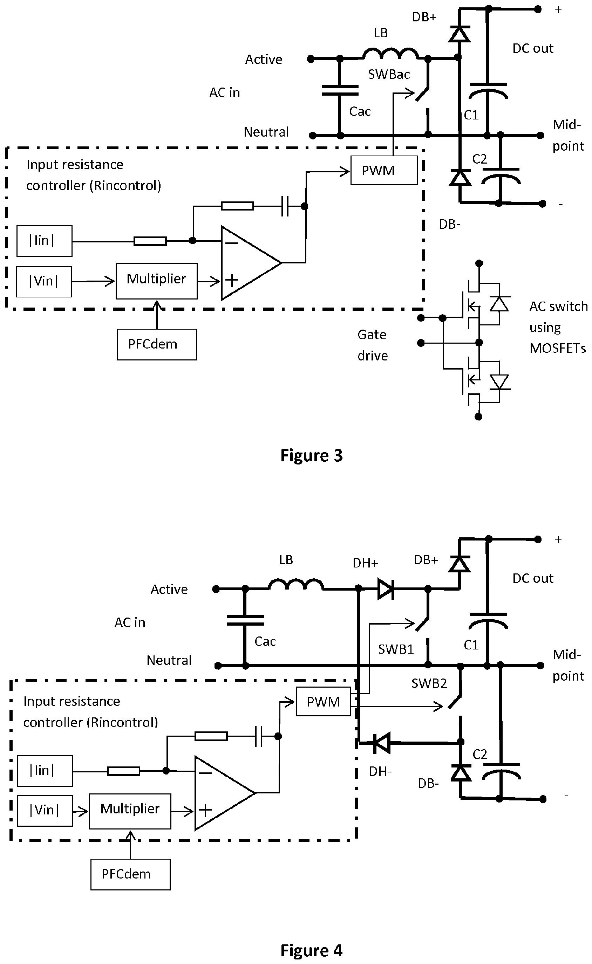

Reference 2: "The Essence of Three-Phase PFC Rectifier Systems - Part II" by Kolar et al. published in IEEE Transactions on Power Electronics February 2014 describes suitable controls for the VIENNA rectifier with reference to the circuit shown in Figure 3. The mid-point "M" is made stable by first comparing it to the positive and negative outputs and amplifying any difference as "i0*" and adding or subtracting this from the input current feedback signals "Ii" to create a DC offset in the apparent input current. The controller then draws a real DC current from the AC input which corrects any imbalance.

The DC current drawn from the AC input should not be continuous since most AC supplies have very little DC capacity. The three phase supply transformer is magnetised by any DC current, possibly leading to its saturation. Fortunately any imbalance is quickly corrected by this circuit and so the DC current is not required continuously. However if a load were to be connected between positive output and the mid-point (or alternatively the negative output and the mid-point) then a constant requirement for DC current from the AC supply would be generated by this control strategy.

Reference 3: "A Three-Phase Off-Line Switching Power Supply with Unity Power Factor and Low TIF" by Gauger et al. published in INTELEC 1986 describes the use of three converters arranged in star configuration with "resistive input characteristic". The three converters each present the same "apparent resistance" to the AC supply, which stabilises the "synthetic neutral" (star point) and does not need a neutral connection. The converters have full bridge inputs and require three isolated DCDC converters to achieve a single regulated output.

Reference 4: US Patent publication US2008/0013352 A1 "Active Rectifier System with Power Factor Correction" by Baker, July 13 2006, shows a rectifier with a balanced output around a mid-point and no feedback control system for midpoint control, but requires a neutral connection for its operation.

Reference 5: US Patent number US5502630 "Power Factor Corrected Rectification" by Rokhvarg, July 19 1994, shows in Figure 7 a main power topology and control circuit producing a resistive input characteristic (input current proportional to input voltage) for each input. However, the control circuit requires a "steering circuit 22" to create a "balancing means" as shown in Figure 3. Details of the control circuit are shown in Figure 8.

The control circuit's operation involves a "master control means 38a" whose control signal T12 is sent to the slave "control means 38b" (and 38c presumably) but is modified by "summing circuit 42". This summing circuit is fed by "differential integrator 44" which compares the average input current of the master filtered by "low pass filter 41" with that of the slave filtered by "low pass filter 46". The differential integrator 44 integrates the difference to cause the slaves to have the same input current as the master on average.

In the particular case of a mains voltage imbalance where the three resistive input characteristics are equal, the three input currents would be different. However the control circuit of Figure 8 makes the three input currents equal and so the three input resistances must be different. The control circuit thus cannot properly stabilise the star point in the imbalance case, and this leads to a possible runaway of the star point.

Furthermore, under perfectly balanced mains voltage conditions, but under transient load conditions, it is likely that the three controllers 38a, 38b, 38c will have different demands due to the lags inherent in the integrators and filters, and so will draw unequal currents resulting in temporary imbalance and possible instability of the "common terminal TN". This instability presumably creates the need for "steering circuit 22". These various balancing means add complication and cost to the circuit, and may not achieve stability in all cases.

Given the disadvantages of the prior art converters described above, an objective of the present inventors was to use simple controls, and enjoy stable operation under all conditions in a three-phase power-factor correcting AC-DC non-isolated rectifier. In particular, it was hoped that Reference 5's complicated balancing means and steering circuit could be replaced by the simpler feedback control system for mid-point balancing described in References 1 and 2, thereby simplifying the converter.

Experiments were partly successful but there was a distortion in the current waveform. Investigation revealed that the feedback control system for mid-point balancing was opposing another mechanism with a slightly different set-point. The opposition created the distortion that the inventors saw. As a step to understanding the phenomenon the feedback control system was cautiously disconnected at one load point. When that was done, the current distortion largely disappeared. Reconnecting the feedback control system restored the problem. This was tried at a variety of loads, all with a similar result. Light load was tried, and then no load, all with success. Finally, the feedback control system was completely removed and the rectifier could be operated under all conditions successfully with a stable mid-point at all times.

Analysis of this unexpected result reveals the mechanism which is disclosed in this specification together with the complete topology and control necessary for this result.

## SUMMARY OF INVENTION

The present invention is based on the inventors' recognition that combining three single-phase symmetrical AC-DC boost converters, by connecting them in parallel at their mid-points and outputs, and controlling them such that each converter presents an input resistance of equal value to the AC supply, produces a stable star-point at the AC input and a stable mid-point at the DC output, whereby the DC output voltages remain balanced around a mid-point voltage without additional balancing circuitry.

More specifically, the present invention provides a three-phase non-isolated AC to DC rectifier operable without connection to a neutral of a three-phase AC supply, comprising:

a) three single-phase symmetrical power converter circuits, each circuit comprising:

- an AC input side comprising an AC active terminal and an AC neutral terminal;
- a symmetrical DC output side comprising a positive DC output terminal, a negative DC output terminal and a mid-point terminal, the mid-point terminal of the output side being connected to the AC neutral terminal of the input side; and
- a power factor correcting (PFC) rectifier comprising one or more boost converters configured to produce equal and opposite DC output voltages around a mid-point voltage, with a positive DC output voltage being delivered to the positive DC output terminal, a negative DC output voltage being delivered to the negative DC output terminal, and the mid-point voltage being delivered to the mid-point terminal,
- wherein the PFC rectifier presents an equivalent input resistance to the AC supply which is controllable by a demand signal, and
- wherein the three single-phase symmetrical power converter circuits are connected in parallel at their output terminals, with the positive DC output terminals connected together, the negative DC output terminals connected together and the mid-point terminals connected together, whereby the connection of the mid-point terminals on the output side also connects the AC neutral terminals on the input side to form a star-point without requiring a connection to the neutral of the AC supply; and

(b) a single controller configured to regulate the DC output voltage appearing between the positive DC output terminal and the negative DC output terminal by controlling all three PFC rectifiers together with equal demand signals to thereby cause each input resistance, appearing between the corresponding AC active terminal and the star-point, to present an equal value to the other two input resistances, and thereby stabilise the star-point relative to the three-phase AC supply and also cause the DC output voltages to balance around to the mid-point without additional balancing circuitry.

In this context, the term "balancing", when referring to balancing of the mid-point, means that the average levels (ignoring ripple at some multiple of mains frequency) of the positive and negative DC output voltages will be the same at all times. Should any imbalance occur a balancing means corrects this.

By way of comparison, in References 1 and 2 the balancing means is a control circuit that affects the DC offset in the AC current sensing to cause a net DC current to be drawn by the circuit thereby correcting the imbalance. In Reference 5 the balancing means is achieved by the charge pumping circuit 22.

In the present invention, the balancing of the mid-point is provided by the star point stabilisation control. If an imbalance were to occur, then it would return to perfect balance in the case of a load across the positive and negative DC output terminals. In the case of a deliberately unbalanced load a new equilibrium balance is reached that is stable.

In one embodiment of the invention, each PFC rectifier comprises an average current controller configured to control the input resistance of the corresponding PFC rectifier by having its current determined by multiplying the demand signal by the AC input voltage measured between the corresponding AC active terminal and the star-point. Preferably the average current controller of each PFC rectifier is well matched to the other average current controllers. This enables close matching of the input resistances of the PFC rectifiers under all operating conditions and at all times.

In one embodiment, a single voltage control loop regulates the total output voltage, appearing between the positive and negative DC output terminals, by measuring the total output voltage and comparing it with a reference voltage and multiplying the difference by a gain to generate the demand signal. This single demand signal may then be provided to all PFC rectifiers.

In one embodiment, the bandwidth of the voltage control loop is made low (for example 20Hz) as typically occurs in single-phase front-end rectifiers, which permits high impedance sources like motor generator sets to be connected without stability problems, minimizes distortion (better than 5% is typical), and allows power-factor close to unity (0.98 -0.99 is typical) by keeping the demanded value of the input resistances almost constant during each mains cycle.

In another embodiment, the bandwidth of the three average current controllers is made high (for example 5kHz as is typical of single-phase front-end rectifiers), which further permits low distortion and high power-factor of the input current due to the small phase lag between input voltage and input current.

Advantageously, the boost converters of the three single-phase symmetrical power converter circuits share DC output capacitors, with a first output capacitor connected between the positive DC output terminal and the mid-point terminal and a second output capacitor connected between the negative DC output terminal and the mid-point terminal. The advantage gained is that the ripple currents of the three phases are added and some ripple cancellation occurs resulting in significantly lower ripple currents than in the single-phase case. The lower ripple current results in lower loss in the capacitors, a lower capacitance requirement, or both.

In one embodiment, the AC active terminal of each phase is connected to the mid-point terminal by an AC rated capacitor sized to carry the boost ripple current without significant voltage ripple.

**BRIEF DESCRIPTION OF THE DRAWINGS**

Figure 1 shows the block diagram for a prior art three-phase PFC rectifier with a single DC output and a mid-point.

Figure 2 shows a prior art single-phase PFC rectifier unsuitable for three-phase operation with a single output.

Figure 3 shows a prior art symmetrical single-phase PFC rectifier that boosts positive half-cycles of the AC mains into a first capacitor C1 and negative half-cycles into a second capacitor C2.

Figure 4 shows a prior art symmetrical single-phase PFC rectifier having two half-wave boost circuits achieving a similar outcome to Figure 3.

Figure 5 shows an arrangement in accordance with a preferred embodiment of the present invention. In this embodiment, each block represents the circuit of Figures 3 or 4 with their output terminals joined and also their mid-point terminals connected to each other, which joins the common input terminals into a star-point.

Figure 6 shows an implementation of the embodiment depicted in Figure 5 using three instances of the PFC rectifier shown in Figure 3, together with control blocks.

DETAILED DESCRIPTION

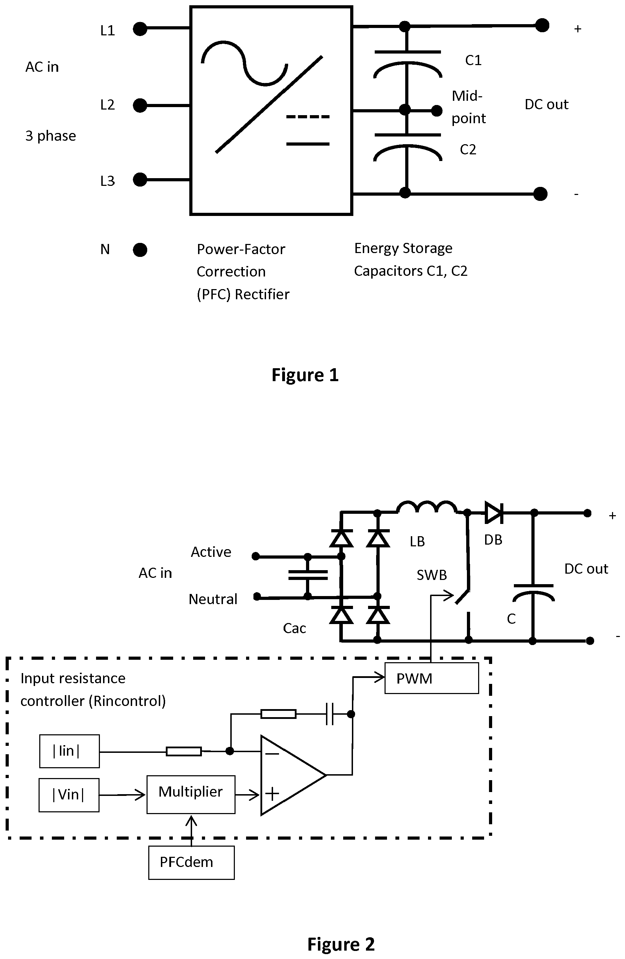

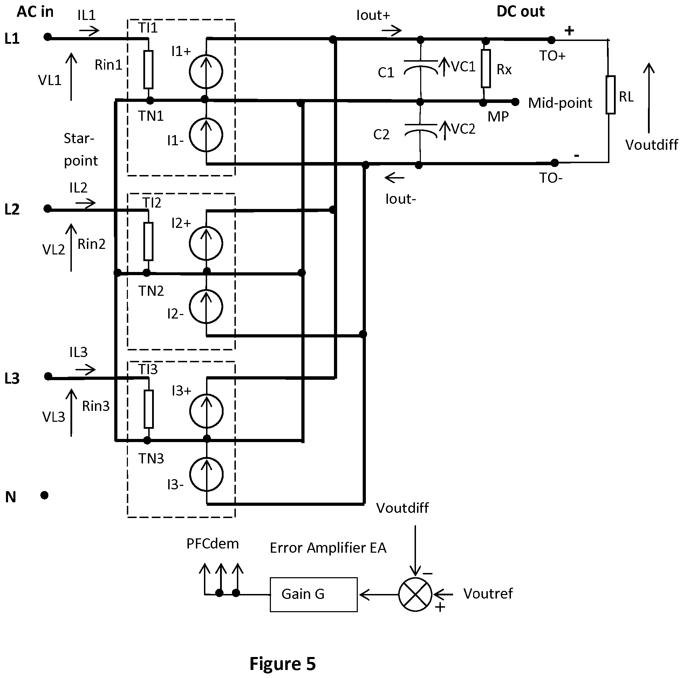

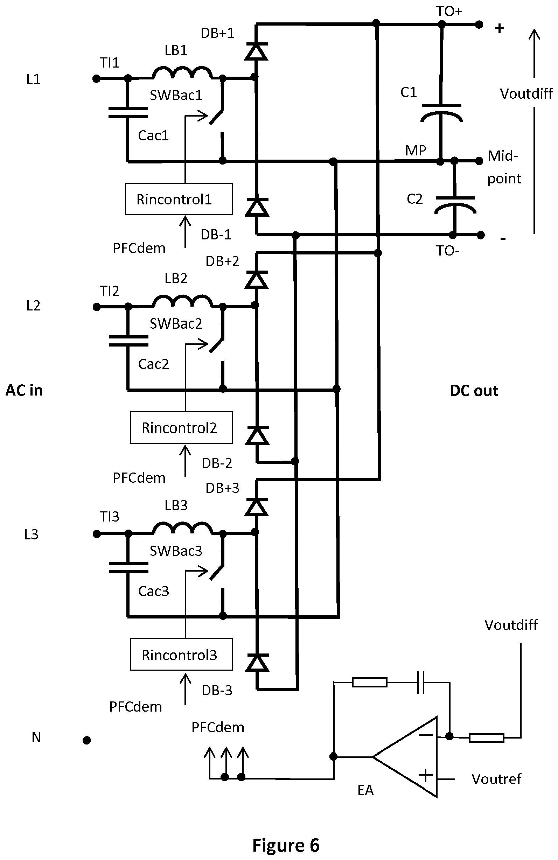

The following description commences with an outline of the operation of several prior art power-factor correcting (PFC) rectifiers. Figure 1 shows a three-phase PFC rectifier whereas Figures 2 to 4 show single-phase PFC rectifiers. Each of the single-phase rectifiers includes a boost stage enabling control of input current over all parts of the mains voltage waveform, and using suitable controls allowing the input impedance to behave like a controllable resistance. However, only the topologies shown in Figures 3 and 4 are extendable to three-phase operation, as described further below. An embodiment of the invention is described with reference Figures 5 and 6.

Figure 1 (prior art) shows a block diagram of a three-phase PFC rectifier with a single DC output balanced around a mid-point. In some applications the mid-point can be used as an output, such as when connected to a three-level DCDC converter or three-level AC inverter which requires three input voltages. There is no connection to the neutral N of the AC supply. Capacitors C1 and C2 provide filtering of the high frequency switching currents and filtering of any mains frequency currents or their harmonics which are present in some topologies, and also holdup energy storage for the subsequent load to relieve the effect of temporary interruption of the mains supply.

Figure 2 (prior art) shows a common single-phase PFC rectifier with a single DC output. The input bridge rectifier connects the negative terminal of the output to the Active input terminal during negative half cycles of the AC mains, and to the Neutral input terminal during positive half cycles. A boost inductor LB, switch SWB, diode DB, and capacitor C form a boost converter which boosts the rectified AC voltage to a steady DC output maintained by energy storage capacitor C. The current delivered to the capacitor C has a large 100Hz ripple present assuming 50Hz mains frequency and this large low frequency ripple necessitates a large value of C:

$$Ic_{rms} = \frac{Iout}{\sqrt{2}} = 0.707\,Iout \ (1)$$

The boost converter is assumed to be fed from a voltage source but the AC mains usually has significant inductance present which presents a high impedance at the switching frequency and so a capacitor Cac is included to carry the switching ripple current.

The switch SWB is a unidirectional type such as a MOSFET or IGBT and is fed by a modulator, typically PWM as shown, which is driven by an input current control loop, typically an average current loop as shown. The average current loop compares the magnitude of the input current |Iin| with the output from a Multiplier and the amplified error signal controls the PWM modulator, thus making the average input current equal to the output from the Multiplier. The Multiplier multiplies the magnitude of the input voltage |Vin| with an input demand control signal PFCdem. So considering a sinusoidal input voltage, at each point on the sinusoid the average input current is equal to that voltage multiplied by the input demand control signal PFCdem. The signal PFCdem is a slowly varying control whose value is almost constant during a mains cycle, and would typically come from a voltage loop amplifier (not shown) regulating the DC output voltage. So during a mains cycle the AC input current is proportional to the AC input voltage and will have the same shape and phase as the AC input voltage.

The arrangement of AC input current equal to AC input voltage multiplied by the PFCdem signal is equivalent to a resistor across the AC input whose value is:

$$Rin = \frac{1}{PFCdem} \ (2)$$

The circuit delivers this result when the inductor current is continuous or discontinuous thanks to the average current loop.

The control arrangement in the dashed box in Figure 2 can be said to be an input resistance controller or Rincontrol.

There are many other ways to achieve an input current proportional to input voltage including critical conduction mode control where the inductor current reaches zero in each switching cycle and the frequency of operation varies, constant on time control, constant off time control, resonant control, quasi resonant control, and others. Sometimes the multiplication function is achieved without a discrete multiplier, for example by operating in discontinuous mode under all conditions and having a constant on time then the performance approaches that of an ideal input resistance as the output voltage becomes very high. Many control implementations are available in single ICs, some with as few as 8 pins. In that sense the controls can be said to be simple.

But three circuits of the type shown in Figure 2 cannot be extended to three-phase operation by joining the three neutral terminals and sharing a common DC output. The problem is the alternating connection of the negative output terminal to both of the AC input terminals which creates incorrect operation and possible failure of the circuits. Three circuits of Figure 2 can be used for three-phase operation if the DC outputs are isolated from each other but this usually necessitates three isolated converters to be the output of each.

Figure 3 (prior art) shows a symmetrical single-phase PFC rectifier that boosts positive half cycles of the mains into a first output capacitor C1 via a diode DB+ and negative half cycles into a second output capacitor C2 via a second diode DB-. The total DC output voltage is twice that of the circuit in Figure 2.

The switch SWBac is bi-directional and can conduct or block current in both directions. It is commonly constructed using two back-to-back MOSFETs (as shown in the inset detail "AC switch using MOSFETs"), or two back-to-back IGBTs together with antiparallel diodes, and other implementations are possible. Gate signals can be the same in both devices.

The input capacitor Cac and boost inductor LB have the same ratings as in Figure 2, and the switch SWB is usually implemented in two devices each having the same voltage rating as in Figure 2. The diodes DB+ and DB- see twice the voltage and one half the average current as DB in Figure 2. Output capacitors C1 and C2 each have the same voltage as capacitor C in Figure 2, but see ripple at 50Hz which is very disadvantageous and necessitates much larger values of capacitors C1 and C2 than was required for capacitor C in Figure 2.

The control circuit is in principle the same as in Figure 2 and all of the alternative methods can be applied, though the sensing of the magnitudes of the input current Iin and input voltage Vin may require additional circuitry for signal rectification and the gate drive connection to switch SWBac may require isolation.

Compared to Figure 2 there is one less diode conducting when the switch is on and two less when the switch is off, and so the efficiency of Figure 3 can be greater. The large values of the capacitors C1 and C2, the high voltage rating of the diodes DB+ and DB-, the possibly double sized implementation of the switch SWBac, and the control implementation difficulties make this circuit unpopular as a single-phase PFC front-end non-isolated rectifier. But it connects the AC neutral and DC mid-point which permits three-phase operation, as will be described below with reference to Figure 6.

Figure 4 (prior art) shows two half-wave boost circuits achieving a similar outcome to Figure 3. Diodes DH+ and DH- are half wave rectifiers that block the output voltage, switches SWB1 and SWB2 are unidirectional switches and they and diodes DB+ and DB- have similar voltage rating to the Figure 2 devices. Each switch conducts current only half the time depending on the polarity of the input voltage. Gate drive signals can be the same to each switch SWB1 and SWB2 and isolation is usually required for one or both gate drives.

Compared to Figure 2 there is one less diode conducting when the switch is on and one less when the switch is off so efficiency can be greater. The AC neutral and DC mid-point are again joined.

Figure 5 shows an arrangement in accordance with a preferred embodiment of the present invention. Each dashed block represents a single-phase symmetrical power converter such as the circuit of Figure 3 or Figure 4, and three of these are joined in parallel at their outputs. The neutral N of the AC mains is not connected and the three input terminals TN1, TN2, TN3 which were required to connect to neutral in the single-phase case now only connect to each other to form a star-point.

A load resistor RL is shown, and an extra resistor Rx is a test resistor which is initially open circuit, and which is connected between the + terminal TO+ and the mid-point terminal MP to demonstrate the stability of the mid-point in the analysis below. Under normal conditions Rx would not physically exist, but could represent the possible imbalance impedance of a load that uses all three output terminals such as a three level inverter.

The input resistances Rin1,2,3 are shown inside the dashed blocks and the balance of the mid-point MP with respect to the AC input voltages VL1,2,3 is assured by making the values of the input resistances Rin1,2,3 equal at all times. This makes the mid-point voltage a stable star-point voltage (it being formed by a star arrangement of three equal resistors). It can be noted that the mid-point or star-point voltage is the same as the neutral voltage N ideally, and we will assume this in the analysis.

The values of the input resistors Rin1,2,3 are controlled using three well-matched control circuits (not shown in Figure 5 but labelled as "Input resistance controller (Rincontrol)" in Figures 3 and 4) and driven by a single input demand control signal PFCdem, ensuring that the input resistances are equal at all times and under all operating conditions. The power drawn by each input resistor Rin1,2,3 appears on the output as a current I1,2,3 feeding the voltage on shared output capacitors C1 or C2 depending on the polarity of each input voltage on terminals TI1,2,3. The demand signal PFCdem is set by an error amplifier EA comparing the total output voltage Voutdiff between the + and - terminals, TO+ and TO- respectively, and a reference Voutref. The output is connected to a load RL between the + and - terminals and Rx is initially open circuit.

In a balanced three-phase system the input voltages VL1,2,3 with respect to neutral are:

$$VL1 = \hat{V} sin\ \omega t, \qquad VL2 = \hat{V} sin\left(\omega t + \frac{2\pi}{3}\right), \qquad VL3 = \hat{V} sin\left(\omega t + \frac{4\pi}{3}\right) (3)$$

The input currents IL1,2,3 drawn by the input resistances Rin1,2,3 are of the same form as the input voltages:

$$IL1 = \hat{I}\sin \omega t, \qquad IL2 = \hat{I}\sin\left(\omega t + \frac{2\pi}{3}\right), \qquad IL3 = \hat{I}\sin\left(\omega t + \frac{4\pi}{3}\right)(4)$$

Over a complete cycle of the AC input (20ms assuming 50Hz line frequency) the input voltages VL1,2,3 and currents IL1,2,3 have equal amounts positively and negatively around a stable star point as required by these equations.
Assuming no losses in the rectifier, the total instantaneous output current lout+ when the input voltages are more positive than the star point can be written:

$$Iout+ = I_{1+} + I_{2+} + I_{3+} = \sum_{pos} \frac{VL1.IL1 + VL2.IL2 + VL3.IL3}{VC1} (5)$$

Where VL1.IL1 only applies if VL1 is positive, and has a value of zero if VL1 is negative, and similarly for VL2 and VL3, and VC1 is the voltage present on the first output capacitor C1. This expression tells us that the power in those phases having an instantaneous positive voltage is delivered to the positive output, and if VC1 rises then the total output current falls.
For negative input voltages the total instantaneous output current lout-is:

$$Iout- = I_{1-} + I_{2-} + I_{3-} = \sum_{neg} \frac{VL1.IL1 + VL2.IL2 + VL3.IL3}{VC2} (6)$$

This expression only applies to the instantaneously negative input voltages.
Examination of the equations reveals that at each instant in time there is either one positive and two negative voltages, two positive and one negative voltage, or one positive and one negative and one zero voltage. To illustrate:

| t | VL1, 1L1 | VL2,IL2 | VL3,IL3 | lout+ | lout- |
|---|---|---|---|---|---|
| 0 | 0, 0 | 0.866V, 0.866I | -0.866V,-0.866I | 0.75VI/VC1 | 0.75VI/VC2 |
| Pi/12 (30 degrees) | 0.5V, 0.5I | 0.5V, 0.5I | -1V, -1I | 0.5VI/VC1 | 1VI/VC2 |
| Pi/6 (60 degrees) | 0.866V, 0.866I | 0, 0 | -0.866V,-0.866I | 0.75VI/VC1 | 0.75VI/VC2 |
| Pi/4 (90 degrees) | 1V, 11 | -0.5V, -0.51 | -0.5V, -0.51 | 1VI/VC1 | 0.5VI/VC2 |
| Pi/3 (120 degrees) | 0.866V, 0.8661 | -0.866V,-0.8661 | 0, 0 | 0.75VI/VC1 | 0.75VI/VC2 |

At each instant of time there are positive and negative voltages and so current always flows into and out of the positive and negative terminals, TO+ and TO- respectively. The current that flows varies with the sum of the terms as illustrated in the table and resulting in a ripple current in C1 and C2:

$$Ic_{rms} = \frac{Iout}{3\sqrt{2}} = 0.236Iout \ (7)$$

This result is due to the addition of currents from the three phases and is 1/3 the amplitude of the single-phase case of Figure 2 and the ripple current appears at 3x the mains frequency (or 150Hz assuming 50Hz mains frequency). These factors mean that C1 and C2 can be much smaller than the single-phase rectifier's capacitor when delivering the same power. In practice the size is dominated by the high frequency switching ripple rating and the need for holdup time.
Consider the load RL. It takes the same current from the + and - terminals TO+ and TO- by inspection and so, according to equations (5) and (6), the capacitor voltages VC1 and VC2 are the same.
Consider making Rx change from open circuit to a value equal to RL. This forces an imbalance in the output current so that more lout+ current flows than lout-, the difference flowing in the mid-point MP. Equations (5) and (6) continue to apply and more current will be drawn from the + terminal TO+ and so VC1 will drop, causing the current in RL to drop and so VC2 will increase. In this example VC1 drops to 76% of its initial value, VC2 increases to 108%, and so the voltage Voutdiff across RL drops to 94% of its initial value. The total power in RL and Rx is the same as the original power in RL with Rx open circuit. The arrangement can be said to be stable as there is only one solution. Note that after some time the loop amplifier EA would restore the output voltage Voutdiff to 100% and in so doing would increase the input power to supply both RL and Rx. At that time VC1 would be 83%, VC2 would be 117%, and Voutdiff would be 100%. By inspection a similar result would occur if Rx was connected between the negative output TO- and mid-point MP and so we can say that loading the mid-point MP to either of the output terminals TO+ or TO- is acceptable and stable. Note that no DC current is required to be drawn from the AC supply since the output voltages adjust to suit the load conditions satisfying equations (5) and (6) while preserving the three input resistors to be equal at all times.

This result was unexpected, because based on the teachings of References 1 and 2, a separate balance circuit was expected to be required to achieve mid-point stability.

The controls in Reference 2 implemented the strategy of Reference 3 to achieve stable operation of the AC input, having resistive input impedances and a common demand signal but needed additional means to stabilise the DC output mid-point. It is possible that the additional feed forward of the AC voltage and the third harmonic contributed to or was the cause of the need for an extra stabilisation control. It is also possible that the disconnection of the mid-point and the AC star point contributed to this need.

Reference 3 showed a method of AC star point stability, with a resistive input characteristic and a common demand signal but did not consider mid-point stability because its topology did not have a mid-point.

Reference 5 also had a balancing circuit for mid-point stability, but one more costly than that of References 1 and 2, involving a charge pump circuit called "steering circuit 22" that would pump charge from the higher voltage capacitor to the lower one in the event of any imbalance, thus correcting it. The control circuit used differed from that of Reference 2 or 3 in that it demanded equal average currents from the three phase inputs, which is appropriate only when the mains voltages are perfectly balanced. In the event of any AC imbalance the circuit would be expected to run away, meaning that the star point would move away from its ideal position in increasingly large amounts as time passed. The control strategy was similar to Reference 3 at frequencies above a sub-mains frequency (say 20Hz), and would present three resistive input impedances to draw sinusoidal current. But at still lower frequencies the average currents would be matched by the differential integrator 44 and so would not present resistive input characteristics, leading to the stability problems addressed by the steering circuit 22. Also in Reference 5 a load step creates a transient which is responded to by the master, but the slaves respond after a delay caused by the filters 41 and 46 and the differential integrator 44, meaning that the input resistances are different in the transient case which would lead to another opportunity for runaway.

In comparison, the present inventors discovered that when they connected the mid-points and outputs of three symmetrical single-phase PFC rectifiers, and controlled them in such a way that their input resistances remained equal at all times, the mid-point voltage remained stable and the DC output voltages remained balanced around the midpoint, all without any additional balancing circuitry.

Figure 6 shows a complete power circuit implementing one embodiment of the present invention using three Figure 3 circuits but not showing EMI filtering components or details of the three input resistance controllers Rincontrol1,2,3 (equivalent to Rincontrol shown in Figures 2 to 4). Three AC rated input capacitors Cac1,2,3 connect from respective input terminals TI1,2,3 to the mid-point MP, and are sized so that only a small voltage ripple (say 2%) occurs across them due to the switching ripple current. Three boost inductors are switched to the mid-point MP by the AC switches SWBac1,2,3 and controlled by independent and well-matched controllers Rincontrol1,2,3, each responding to the same demand for input resistance given by input demand control signal PFCdem.

The three independent controllers Rincontrol1,2,3 have a high bandwidth (say 5kHz), and are well-matched so that the single demand signal PFCdem will achieve the well-matched input resistances under all operating conditions and at all times.

When the switches SWBac1,2,3 turn off, the inductor currents are carried by the boost diodes DB+1,2,3 or DB-1,2,3 depending on the polarity of the input voltage VL1,2,3 of each phase measured with respect to the mid-point MP. Capacitors C1 and C2 store energy and carry switching ripple current and some current at 3x the mains frequency.

The demand signal PFCdem for each input resistance controller Rincontrol1,2,3 is generated by comparing the output voltage Voutdiff with a reference voltage Voutref using amplifier EA whose output is PFCdem. The bandwidth of this loop is made low (say 20Hz) to minimally distort the input current waveforms (say better than 5% THD) and provide good power factor (say better than 0.98 at full load), but fast enough to respond to load changes without the output voltage varying too much (say 10% change for 0-100% step load).

The minimum output voltage that can be demanded must be greater than or equal to the peak of the AC input voltage Vin measured with respect to the mid-point (or line to neutral voltage of the mains supply) which results in:

$$Voutdiff \geq 2\sqrt{2}Vin \cong 2.83Vin \quad (8)$$

The present invention achieves the three-phase rectifier function delivering high power-factor and low distortion of input current, a naturally stabilised star-point, a balanced DC output with a naturally stabilised DC mid-point, no common mode voltage between AC input and DC output, and using a simple control strategy.

**Claims**

1. A three-phase non-isolated AC to DC rectifier operable without connection to a neutral of a three-phase AC supply, comprising:

    a) three single-phase symmetrical power converter circuits, each circuit comprising:

        - an AC input side comprising an AC active terminal and an AC neutral terminal;
        - a symmetrical DC output side comprising a positive DC output terminal, a negative DC output terminal and a mid-point terminal, the mid-point terminal of the output side being connected to the AC neutral terminal of the input side; and
        - a power factor correcting (PFC) rectifier comprising one or more boost converters configured to produce equal and opposite DC output voltages around a mid-point voltage, with a positive DC output voltage being delivered to the positive DC output terminal, a negative DC output voltage being delivered to the negative DC output terminal, and the mid-point voltage being delivered to the mid-point terminal,
        - wherein the PFC rectifier presents an equivalent input resistance to the AC supply which is controllable by a demand signal, and
        - wherein the three single-phase symmetrical power converter circuits are connected in parallel at their output terminals, with the positive DC output terminals connected together, the negative DC output terminals connected together and the mid-point terminals connected together, whereby the connection of the mid-point terminals on the output side also connects the AC neutral terminals on the input side to form a star-point without requiring a connection to the neutral of the AC supply; and

    (b) a single controller configured to regulate the DC output voltage appearing between the positive DC output terminal and the negative DC output terminal by controlling all three PFC rectifiers together with equal demand signals to thereby cause each input resistance, appearing between the corresponding AC active terminal and the star-point, to present an equal value to the other two input resistances, and thereby stabilise the star-point relative to the three-phase AC supply and also cause the DC output voltages to balance around to the mid-point without additional balancing circuitry.

2. The rectifier of claim 1 wherein each PFC rectifier comprises an average current controller configured to control the input resistance of the corresponding PFC rectifier by having its current determined by multiplying the demand signal by the AC input voltage measured between the corresponding AC active terminal and the star-point.

3. The rectifier of claim 2 wherein the average current controller of each PFC rectifier is well matched to the other average current controllers.

4. The rectifier of claim 1 wherein a single voltage control loop regulates the total output voltage, appearing between the positive and negative DC output terminals, by measuring the total output voltage and comparing it with a reference voltage and multiplying the difference by a gain to generate the demand signal, and wherein the same demand signal is provided to all PFC rectifiers.

5. The rectifier of claim 4 wherein the bandwidth of the voltage control loop is low.

6. The rectifier of claim 4 wherein bandwidth of the voltage control loop is 20Hz.

7. The rectifier of claim 2 wherein the bandwidth of the average current controllers is high.

8. The rectifier of claim 2 wherein the bandwidth of the average current controllers is 5kHz.

9. The rectifier of claim 1 wherein the boost converters of the three single-phase symmetrical power converter circuits share DC output capacitors, with a first output capacitor connected between the positive DC output terminal and the mid-point terminal and a second output capacitor connected between the negative DC output terminal and the mid-point terminal.

L1 ●

AC in

L2 ●

3 phase

L3 ●

Power-Factor Correction (PFC) Rectifier

C1

Mid-point

C2

DC out

+

−

N ●

Power-Factor
Correction
(PFC) Rectifier

Energy Storage
Capacitors C1, C2

**Figure 1**

Active

AC in

Neutral

Cac

LB

SWB

DB

C

DC out

+

−

Input resistance
controller (Rincontrol)

PWM

|Iin|

|Vin| → Multiplier → +

−

PFCdem

**Figure 2**

**Figure 3**

**Figure 4**

**Figure 5**

**Figure 6**

Europäisches
Patentamt

European
Patent Office

Office européen
des brevets

## EUROPEAN SEARCH REPORT

Application Number

EP 17 17 0228

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 258 958 A (FRONIUS SCHWEISSMASCHINEN K G [AT]) 24 February 1993 (1993-02-24) * page 23, paragraph 5 - page 25, paragraph 1; figure 16 * | 1-9 | INV. H02M1/42 |
| X | GENG SHENGBAO ET AL: "Input impedance improvement by using digital compensation strategy for high power density rectifiers with wide load operation", 2014 IEEE APPLIED POWER ELECTRONICS CONFERENCE AND EXPOSITION - APEC 2014, IEEE, 16 March 2014 (2014-03-16), pages 912-919, XP032591041, DOI: 10.1109/APEC.2014.6803417 [retrieved on 2014-04-21] * page 912 - page 913; figures 1-3 * | 1 | |
| X | LEIBL MICHAEL ET AL: "New boundary mode sinusoidal input current control of the VIENNA rectifier", 2015 IEEE ENERGY CONVERSION CONGRESS AND EXPOSITION (ECCE), IEEE, 20 September 2015 (2015-09-20), pages 201-209, XP032800578, DOI: 10.1109/ECCE.2015.7309689 [retrieved on 2015-10-27] * page 201 - page 205; figure 6 * | 1 | |

TECHNICAL FIELDS
SEARCHED (IPC)

H02M

The present search report has been drawn up for all claims

| Place of search | Date of completion of the search | Examiner |
|---|---|---|
| The Hague | 17 October 2017 | Gusia, Sorin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ............................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 17 0228

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2017

| Patent document cited in search report | | Publication date | Patent family member(s) | | Publication date |
|---|---|---|---|---|---|
| GB 2258958 | A | 24-02-1993 | AT | 403865 B | 25-06-1998 |
| | | | DE | 4219222 A1 | 21-01-1993 |
| | | | FR | 2679079 A1 | 15-01-1993 |
| | | | GB | 2258958 A | 24-02-1993 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080013352 A1
- US 5502630 A

**Non-patent literature cited in the description**

- **KOLAR.** A Novel Three-Phase Utility Interface Minimizing Line Current Harmonics of High-Power Telecommunications Rectifier Modules. *INTELEC,* 1993
- **KOLAR et al.** The Essence of Three-Phase PFC Rectifier Systems - Part II. *IEEE Transactions on Power Electronics,* February 2014
- **GAUGER et al.** A Three-Phase Off-Line Switching Power Supply with Unity Power Factor and Low TIF. *INTELEC,* 1986